# EUROPEAN PATENT APPLICATION

(11) **EP 4 844 027 A1**
(43) Date of publication of application: **25.11.2026**
(21) Application number: 24918662.8
(22) Date of filing: 12.11.2024
(51) Int. Cl.: C08L 83/07, C08K 3/013, C08L 83/05, C09K 5/14

(54) **THERMALLY CONDUCTIVE ADDITION-CURABLE SILICONE COMPOSITION**

(30) Priority: 16.01.2024 JP 2024004611
(71) Applicant: SHIN-ETSU CHEMICAL CO., LTD., Tokyo 100-0005 (JP)
(72) Inventor: KITAZAWA, Keita, Annaka-shi, Gunma 379-0224 (JP)
(74) Representative: Schicker, Silvia
(86) International application number: PCT/JP2024/040224
(87) International publication number: WO 2025/154375

(57) **Abstract**

The present invention is a thermally conductive addition-curable silicone composition, including: (A) an organopolysiloxane having at least one alkynyl group in one molecule and a kinematic viscosity of 60 to 100,000 mm²/s at 25°C; (B) at least one thermally conductive filler selected from the group consisting of metals, metal oxides, metal hydroxides, metal nitrides, metal carbides, and allotropes of carbon; (C) an organohydrogenpolysiloxane having two or more hydrogen atoms bonded to silicon atom in one molecule; (D) a platinum group metal catalyst; and (E) one or more addition-curing reaction control agents selected from the group consisting of acetylene compounds, nitrogen compounds, organophosphorus compounds, oxime compounds, and organochloro compounds. This provides a thermally conductive addition-curable silicone composition that provides a cured product with a low storage modulus G' and high extensibility when heat-cured.

## Description

### TECHNICAL FIELD

The present invention relates to a thermally conductive addition-curable silicone composition.

### BACKGROUND ART

A common issue for electronic component packages and power modules is widely known to be the heat generation during operation and the resulting performance degradation, and as a means for solving this issue, various heat dissipation technologies are used. In particular, a common technique involves placing a cooling member in the vicinity of the heat-generating portion, bringing the two into close contact, and then efficiently removing heat by the cooling member to dissipate the heat.

In this case, with a gap between the heat-generating portion and the cooling member, the presence of air that has poor thermal conductivity reduces heat transfer therebetween and the temperature of the heat-generating member does not sufficiently decrease. To prevent such a presence of air and improve thermal conduction, heat dissipation materials with favorable thermal conductivity and conformability to the surface of the member, such as heat dissipation grease or heat dissipation sheets, are used.

For actual thermal management of electronic component packages and power modules, heat dissipation grease that can be compressed to be thin and has excellent penetration into the gap between the heat-generating portion and the cooling member is preferable from the viewpoint of heat dissipation performance. An addition-curable heat dissipation grease (for example, in Patent Document 1) is particularly useful because the leakage of the heat dissipation grease (pumping out) caused by expansion and contraction due to the thermal history of repeated heating and cooling of the heat-generating portion can be suppressed by further compressing the grease to a desired thickness and then heat-curing it, and thus the reliability of electronic component packages and power modules can be improved.

In recent years, because of the progressive enlargement of the area and complication of the structure of electronic component packages and power modules, significant warping may occur in the electronic component packages and power modules. In electronic component packages and power modules with large warping, an addition-curable heat dissipation grease that cures softly to follow to the warping and thus provides a cured product with a low storage modulus G' is often used. Meanwhile, to follow the expansion and contraction caused by the thermal history of repeated heating and cooling of heat-generating portions over a long period of time, an addition-curable heat dissipation grease that provides a highly extensible cured product is effective. Generally, the addition-curable heat dissipation grease with a low storage modulus G' of the cured product becomes a putty-like cured product and thus hardly becomes a highly extensible product, and an addition-curable heat dissipation grease that provides a highly extensible cured product becomes a high-hardness and high-strength cured product.

### CITATION LIST

### PATENT LITERATURE

Patent Document 1: JP 2016-053140 A

### SUMMARY OF INVENTION

### TECHNICAL PROBLEM

The present invention has been made in view of the above circumstances, and an object thereof is to provide a thermally conductive addition-curable silicone composition that provides a cured product with a low storage modulus G' and high extensibility when heat-cured.

### SOLUTION TO PROBLEM

To solve the above problems, the present invention provides a thermally conductive addition-curable silicone composition, including:
(A) an organopolysiloxane having at least one alkynyl group in one molecule and a kinematic viscosity of 60 to 100,000 mm²/s at 25°C;
(B) at least one thermally conductive filler selected from the group consisting of metals, metal oxides, metal hydroxides, metal nitrides, metal carbides, and allotropes of carbon: an amount of 10 to 96 mass% based on the total composition;
(C) an organohydrogenpolysiloxane having two or more hydrogen atoms bonded to silicon atom in one molecule: an amount such that the number of Si-H groups in the component (C) is 0.5 to 10 based on the total number of alkynyl groups in the component (A);
(D) a platinum group metal catalyst: an effective amount; and
(E) one or more addition-curing reaction control agents selected from the group consisting of acetylene compounds, nitrogen compounds, organophosphorus compounds, oxime compounds, and organochloro compounds: 0.05 to 5 parts by mass based on 100 parts by mass of the component (A).

The thermally conductive addition-curable silicone composition of the present invention provides a cured product with a low storage modulus G' and high extensibility when heat-cured.

The thermally conductive addition-curable silicone composition of the present invention preferably includes, as the component (F), an organopolysiloxane represented by the following general formula (1) in an amount of 0.5 to 10 mass% based on the total silicone composition 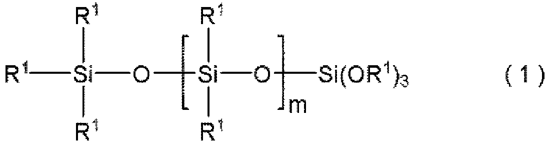 in which, R¹ represents a monovalent hydrocarbon group having 1 to 10 carbon atoms and optionally having a substituent, and represents a monovalent hydrocarbon group not including an aliphatic unsaturated bond, each R¹ is the same or different, and m is an integer of 5 to 100.

In such a thermally conductive addition-curable silicone composition of the present invention, the above component (F) is used to treat the surface of the thermally conductive filler and plays a role in assisting in the high-filling of the filler.

Further, it is preferable that the thermally conductive addition-curable silicone composition of the present invention includes, as the component (G), 0.1 to 10 mass% of an organosilane represented by the following general formula (2) and/or a (partially) hydrolyzed condensate thereof based on the total silicone composition

R²ₐSi(OR³)₄₋ₐ (2)

in which, R² is independently an unsubstituted or halogen-substituted monovalent hydrocarbon group having 1 to 20 carbon atoms, R³ is independently a hydrogen atom or an alkyl group having 1 to 6 carbon atoms, and a is an integer of 1 to 3.

In such a thermally conductive addition-curable silicone composition of the present invention, the above component (G) is used to treat the surface of the thermally conductive filler and plays a role in assisting in the high-filling of the filler.

In the thermally conductive addition-curable silicone composition of the present invention, it is preferable that the component (A) is an organopolysiloxane having at least two alkynyl groups in one molecule.

Further, in the thermally conductive addition-curable silicone composition of the present invention, it is preferable that the component (A) is an organopolysiloxane having at least two ethynyl groups in one molecule.

Such a thermally conductive addition-curable silicone composition of the present invention provides a cured product with a low storage modulus G' and high extensibility when heat-cured.

### ADVANTAGEOUS EFFECTS OF INVENTION

As described above, the thermally conductive addition-curable silicone composition of the present invention provides a cured product with a low storage modulus G' and high extensibility when heat-cured. As a result, the composition can be suitably used in electronic component packages and power modules with large warping, and can also follow the expansion and contraction caused by the thermal history of repeated heating and cooling of the heat-generating portion over a long period of time.

### DESCRIPTION OF EMBODIMENTS

As described above, there has been a need for the development of a thermally conductive addition-curable silicone composition that provides a cured product with a low storage modulus G' and high extensibility.

As a result of diligent research into the above-described problems, the present inventors have found that a thermally conductive addition-curable silicone composition including the above components (A) to (E) can provide a cured product with a low storage modulus G' and high extensibility, thus the inventors have completed the present invention.

That is, the present invention is a thermally conductive addition-curable silicone composition, including:
(A) an organopolysiloxane having at least one alkynyl group in one molecule and a kinematic viscosity of 60 to 100,000 mm²/s at 25°C;
(B) at least one thermally conductive filler selected from the group consisting of metals, metal oxides, metal hydroxides, metal nitrides, metal carbides, and allotropes of carbon: an amount of 10 to 96 mass% based on the total composition;
(C) an organohydrogenpolysiloxane having two or more hydrogen atoms bonded to silicon atom in one molecule: an amount such that the number of Si-H groups in the component (C) is 0.5 to 10 based on the total number of alkynyl groups in the component (A);
(D) a platinum group metal catalyst: an effective amount; and
(E) one or more addition-curing reaction control agents selected from the group consisting of acetylene compounds, nitrogen compounds, organophosphorus compounds, oxime compounds, and organochloro compounds: 0.05 to 5 parts by mass based on 100 parts by mass of the component (A).

The present invention will be described in detail below, but the present invention is not limited thereto.

### [Component (A)]

The component (A) is an organopolysiloxane having at least one, preferably 1 to 100, more preferably 2 to 50, alkynyl groups in one molecule, and a kinematic viscosity of 60 to 100,000 mm²/s at 25°C.

The alkynyl group is preferably a monovalent hydrocarbon group having a carbon-carbon triple bond and having 2 to 8 carbon atoms, more preferably 2 to 6 carbon atoms. Examples thereof include terminal alkynes such as an ethynyl group and a propargyl group, and internal alkynes having a group other than a hydrogen atom on the carbon atom forming a carbon-carbon triple bond. Terminal alkynes are preferable and ethynyl groups are more preferable.

The alkynyl group may be bonded to either a silicon atom at the end of the molecular chain, a silicon atom in the middle of the molecular chain, or both.

The organic group other than the alkynyl group bonded to the silicon atom of the organopolysiloxane is an unsubstituted or substituted monovalent hydrocarbon group having 1 to 18 carbon atoms, preferably 1 to 10 carbon atoms, and more preferably 1 to 8 carbon atoms. Examples thereof include: alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; or groups in which some or all of the hydrogen atoms of these groups are substituted with halogen atoms such as fluorine, bromine, or chlorine, a cyano group or the like (for example, a chloromethyl group, a chloropropyl group, a bromoethyl group, a trifluoropropyl group, and a cyanoethyl group). In particular, the methyl group and phenyl group are preferable.

The above organopolysiloxane has a kinematic viscosity at 25°C of 60 to 100,000 mm²/s, preferably 100 to 30,000 mm²/s. When the kinematic viscosity is less than 60 mm²/s, the physical characteristics of the thermally conductive addition-curable silicone composition of the present invention deteriorate, and when exceeds 100,000 mm²/s, the extensibility of the silicone composition becomes poor.

Note that, in the present invention, the kinematic viscosity is the value measured at 25°C using an Ubbelohde-type Ostwald viscometer (the same applies hereinafter).

The above molecular structure of the organopolysiloxane is not particularly limited as long as it has the above-described properties, and examples thereof include a linear structure, a branched structure, and a linear structure having a partially branched structure or cyclic structure. In particular, those having a linear structure in which the main chain is composed of repeating diorganosiloxane units and both ends of the molecular chain are capped with triorganosiloxy groups are preferable. The organopolysiloxane having a linear structure may also partially have a branched or cyclic structure.

The amount of the component (A) blended is preferably 1.5 to 90 mass%, more preferably 1.7 to 20 mass%, and still more preferably 1.8 to 10 mass%, based on the total thermally conductive silicone composition of the present invention. Within the range of 1.5 to 90 mass%, the thermally conductive addition-curable silicone composition of the present invention has sufficient thermal conductivity and appropriate viscosity increase, exhibiting excellent workability.

One kind of the above organopolysiloxane can be used singly or two or more kinds thereof can be used in combination.

### [Component (B)]

The component (B) is one or more kinds of thermally conductive fillers selected from the group consisting of metals, metal oxides, metal hydroxides, metal nitrides, metal carbides, and allotropes of carbon. Examples thereof include aluminum, silver, copper, metallic silicon, zinc oxide, magnesium oxide, aluminum oxide (alumina), silicon dioxide, cerium oxide, iron oxide, aluminum hydroxide, cerium hydroxide, aluminum nitride, boron nitride, silicon carbide, diamond, graphite, carbon nanotubes, and graphene. One kind of them can be used singly or two or more kinds in appropriate combination, and a combination of large-particle components and small-particle components (a combination of components having different average particle diameters) is preferable.

The average particle diameter of the large-particle components is preferably in the range of 0.1 to 300 µm, more preferably in the range of 5 to 200 µm, and still more preferably in the range of 10 to 150 µm. The average particle diameter of the small-particle components is preferably in the range of 0.01 µm to 10 µm, and more preferably in the range of 0.1 to 5 µm. Within this range, the thermally conductive addition-curable silicone composition of the present invention has appropriate viscosity, excellent extensibility, and the resulting silicone composition becomes uniform.

The ratio between large-particle components and small-particle components is not particularly limited, but a range of 9:1 to 1:9 (mass ratio) is preferable. In addition, the shapes of the large-particle components and small-particle components are not particularly limited and are spherical, irregularly shaped, or needle-shaped.

Note that the average particle diameter can be determined, for example, as the average value (median diameter) based on volume in particle size distribution measurement by laser diffraction.

The amount of the component (B) blended is 10 to 96 mass% based on the total thermally conductive addition-curable silicone composition of the present invention, preferably 40 to 95.5 mass%, more preferably 70 to 95 mass%, and still more preferably 85 to 93 mass%. When the amount is more than 96 mass%, the silicone composition exhibits poor extensibility, and when less than 10 mass%, the thermal conductivity becomes poor.

### [Component (C)]

The component (C) is an organohydrogenpolysiloxane having two or more, preferably 2 to 100, and more preferably 2 to 50 hydrogen atoms bonded to silicon atom (Si-H groups) in one molecule. The organohydrogenpolysiloxane may be one in which the Si-H groups in the molecule can undergo an addition reaction with the aliphatic unsaturated hydrocarbon groups of the component (A) described above in the presence of a platinum group metal catalyst to form a crosslinked structure.

The above molecular structure of the organohydrogenpolysiloxane is not particularly limited as long as it has the above-described properties, and examples thereof include a linear structure, a branched structure, a cyclic structure, and a linear structure having a partially branched structure or cyclic structure. A linear structure and a cyclic structure are preferable.

The above organohydrogenpolysiloxane has a kinematic viscosity at 25°C preferably 1 to 1,000 mm²/s, and more preferably 10 to 300 mm²/s. When the kinematic viscosity is 1 mm²/s or more, the physical characteristics of the thermally conductive addition-curable silicone composition of the present invention become appropriate, and when 1,000 mm²/s or less, the silicone composition exhibits sufficient extensibility.

Examples of the organic group bonded to the silicon atom of the above organohydrogenpolysiloxane include unsubstituted or substituted monovalent hydrocarbon groups other than aliphatic unsaturated hydrocarbon groups. These are unsubstituted or substituted monovalent hydrocarbon groups having 1 to 12 carbon atoms, preferably 1 to 10 carbon atoms. Examples thereof include: alkyl groups such as a methyl group, an ethyl group, a propyl group, a butyl group, a hexyl group, and a dodecyl group; aryl groups such as a phenyl group; aralkyl groups such as a 2-phenylethyl group and a 2-phenylpropyl group; and those in which some or all of the hydrogen atoms are substituted with halogen atoms such as fluorine, bromine, and chlorine, a cyano group, an epoxy ring-containing organic group (a glycidyl group or glycidyloxy-substituted alkyl group) or the like (for example, a chloromethyl group, a chloropropyl group, a bromoethyl group, a trifluoropropyl group, a cyanoethyl group, a 2-glycidoxyethyl group, a 3-glycidoxypropyl group, and a 4-glycidoxybutyl group). Among these, a methyl group and a phenyl group are preferable.

One kind of the above organohydrogenpolysiloxane may be used singly or two or more kinds thereof may be used in combination.

The amount of organohydrogenpolysiloxane blended in the component (C) is an effective amount sufficient for the thermally conductive silicone composition of the present invention to form a cured product, and is an amount such that the number of Si-H groups in the component (C) is 0.5 to 10, preferably 0.7 to 7.5, and more preferably 0.9 to 5.0, based on the total number of alkynyl groups in the component (A). When the amount of the component (C) is less than 0.5, the addition reaction does not proceed sufficiently, and crosslinking becomes insufficient. In addition, when the amount is more than 10, the crosslinking structure becomes nonuniform, and the storage stability of the composition may be significantly deteriorated.

### [Component (D)]

The component (D) is a platinum group metal catalyst. The component (D) functions to promote the addition reaction of the above-described components. A conventionally known platinum group metal catalyst used in the addition reaction can be used. Examples thereof include platinum-based, palladium-based, and rhodiumbased catalysts, and among these, platinum or platinum compounds, which are relatively easy to obtain, are preferable. Specific examples thereof include elemental platinum, platinum black, chloroplatinic acid, a platinum-olefin complex, a platinum-alcohol complex, and a platinum coordination compound. One kind of platinum group metal catalyst may be used singly or two or more kinds thereof may be used in combination.

The amount of the component (D) blended may be an effective amount as a catalyst, that is, an effective amount necessary to promote the addition reaction and to cure the thermally conductive addition-curable silicone composition of the present invention. Preferably, the amount is 0.01 to 10 ppm, more preferably 0.1 to 5 ppm, and still more preferably 0.2 to 3 ppm, based on the mass of platinum group metal atoms based on the total thermally conductive silicone composition of the present invention. When the amount of catalyst is in the range of 0.01 to 10 ppm, the catalytic effect is sufficiently obtained, indicating cost effectiveness. In addition, the storage stability at 25°C is sufficient.

In addition, when the catalyst of the component (D) is used, it may be diluted with an organo(poly)siloxane, toluene, or the like to improve the dispersibility in the thermally conductive addition-curable silicone composition.

### [Component (E)]

The component (E) is one or more addition-curing reaction control agents selected from the group consisting of acetylene compounds, nitrogen compounds, organophosphorus compounds, oxime compounds, and organochloro compounds. The component (E) is an addition-curing reaction control agent that suppresses the progress of the hydrosilylation reaction at room temperature and can be added to extend shelf life and pot life. The addition-curing reaction control agent can be a conventionally known reaction control agent used in thermally conductive addition-curable silicone compositions. Examples thereof include: acetylene compounds such as acetylene alcohols (for example, ethynylmethyldecylcarbinol, 1-ethynyl-1-cyclohexanol, 3,5-dimethyl-1-hexyne-3-ol); various nitrogen compounds such as tributylamine, tetramethylethylenediamine, and benzotriazole; organophosphorus compounds such as triphenylphosphine; oxime compounds; and organochloro compounds.

The amount of the component (E) blended may be an effective amount as an addition-curing reaction control agent, that is, an effective amount necessary to obtain the desired shelf life and pot life. The amount is 0.05 to 5 parts by mass, and preferably 0.1 to 2 parts by mass, based on 100 parts by mass of the component (A). When the amount of the addition-curing reaction control agent is less than 0.05 parts by mass, the desired sufficient shelf life and pot life may not be obtained. In addition, when the amount is more than 5 parts by mass, the curability of the thermally conductive addition-curable silicone composition of the present invention may be deteriorated.

In addition, when the addition-curing reaction control agent is used, it may be diluted with an organo(poly)siloxane or toluene, or the like to improve the dispersibility in the thermally conductive addition-curable silicone composition of the present invention.

In addition to the above components (A) to (E), the thermally conductive addition-curable silicone composition of the present invention can include the following optional components as necessary.

### [Component (F)]

The component (F) is an organopolysiloxane represented by the following general formula (1). The component (F) is used to treat the surface of the thermally conductive filler and plays a role in assisting in the high-filling of the filler 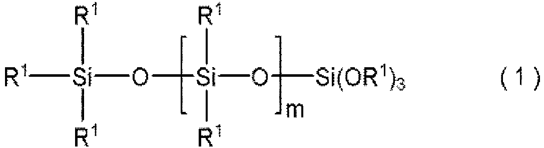 in which, R¹ represents a monovalent hydrocarbon group having 1 to 10 carbon atoms and optionally having a substituent, and represents a monovalent hydrocarbon group not including an aliphatic unsaturated bond, each R¹ is the same or different, and m is an integer of 5 to 100.

In the above formula (1), R¹ is a monovalent hydrocarbon group having 1 to 10 carbon atoms and optionally having a substituent, preferably a monovalent saturated aliphatic hydrocarbon group and optionally having a substituent, a monovalent aromatic hydrocarbon group and optionally having a substituent, and more preferably a monovalent saturated aliphatic hydrocarbon group and optionally having a substituent.

Specific examples of the monovalent saturated aliphatic hydrocarbon group optionally having a substituent include monovalent saturated aliphatic hydrocarbon groups such as: linear alkyl groups such as a methyl group, an ethyl group, a propyl group, a butyl group, a pentyl group, a hexyl group, a heptyl group, an octyl group, a nonyl group, and a decyl group; branched alkyl groups such as an isopropyl group, an isobutyl group, a tert-butyl group, an isopentyl group, and a neopentyl group; cycloalkyl groups such as a cyclopentyl group, a cyclohexyl group, and a cycloheptyl group; and halogen-substituted alkyl groups such as a chloromethyl group, a 3-chloropropyl group, a 3,3,3-trifluoropropyl group, and a bromopropyl group. The number of carbon atoms is preferably 1 to 10, more preferably 1 to 8, and still more preferably 1 to 6.

Specific examples of the monovalent aromatic hydrocarbon group optionally having a substituent include: aryl groups such as a phenyl group and a tolyl group; aralkyl groups such as a benzyl group and a 2-phenylethyl group; and halogen-substituted aryl groups such as a α,α,α-trifluorotolyl group and a chlorobenzyl group. The number of carbon atoms is preferably 6 to 10, more preferably 6 to 8, and still more preferably 6.

In the above formula (1), among these, R¹ is preferably a methyl group, an ethyl group, a 3,3,3-trifluoropropyl group, or a phenyl group, more preferably a methyl group, an ethyl group, or a phenyl group, and particularly preferably a methyl group.

In the above formula (1), m is an integer of 5 to 100, preferably 5 to 80, and more preferably 10 to 60. When the value of m is 5 or more, oil bleeding originating from the silicone composition is suppressed, and the resistance to pumping out is improved. In addition, when the value of m is 100 or less, the wettability with the filler is sufficient, the viscosity of the thermally conductive silicone composition of the present invention becomes appropriate, and the workability on application is improved.

The amount of the component (F) blended is preferably 0.5 to 10 mass%, and more preferably 1.0 to 8.0 mass%, based on the total thermally conductive silicone composition of the present invention. Within the range of 0.5 to 10 mass%, the silicone composition can be set to an appropriate viscosity range.

One kind of the component (F) may be used singly or two or more kinds thereof may be used in combination.

### [Component (G)]

The component (G) is an organosilane represented by the following general formula (2) and/or a (partially) hydrolyzed condensate thereof (partially hydrolyzed condensate, hydrolyzed condensate)

R²ₐSi(OR³)₄₋ₐ (2)

in which, R² is independently an unsubstituted or halogen-substituted monovalent hydrocarbon group having 1 to 20 carbon atoms, R³ is independently a hydrogen atom or an alkyl group having 1 to 6 carbon atoms, and a is an integer of 1 to 3.

The component (G) is used to treat the surface of the thermally conductive filler and plays a role in assisting in the high-filling of the filler.

In the above formula (2), example of R² include an alkyl group, a cycloalkyl group, and an alkenyl group, and specific examples thereof include: alkyl groups such as a methyl group, an ethyl group, a propyl group, a hexyl group, an octyl group, a decyl group, a dodecyl group, a tetradecyl group, a hexadecyl group, and an octadecyl group; cycloalkyl groups such as a cyclopentyl group and a cyclohexyl group; alkenyl groups such as a vinyl group and an allyl group; aryl groups such as a phenyl group and a tolyl group; aralkyl groups such as a 2-phenylethyl group and a 2-methyl-2-phenylethyl group; and halogenated hydrocarbon groups such as a 3,3,3-trifluoropropyl group, a 2-(perfluorobutyl)ethyl group, a 2-(perfluorooctyl)ethyl group, and a p-chlorophenyl group.

In the above formula (2), a is 1, 2, or 3, and is particularly preferably 1.

In the above formula (2), examples of R³ include a hydrogen atom or an alkyl group having 1 to 6 carbon atoms.

The amount of the component (G) blended is preferably 0.1 to 10 mass%, and more preferably 0.5 to 5.0 mass%, based on the total thermally conductive silicone composition of the present invention. Within the range of 0.1 to 10 mass%, the thermally conductive silicone composition can be set to an appropriate viscosity range.

One kind of the component (G) may be used singly or two or more kinds thereof may be used in combination.

### [Other components]

The thermally conductive addition-curable silicone composition of the present invention may contain nonreactive organo(poly)siloxanes such as methylpolysiloxane to adjust the strength and viscosity of the silicone composition. Further, the thermally conductive addition-curable silicone composition of the present invention may include hydrolyzable organopolysiloxanes, various modified silicones, or hydrolyzable organosilanes for the purpose of imparting adhesion to the silicone composition. Further, a solvent may be blended to adjust the viscosity of the silicone composition. Further, to prevent degradation of the silicone composition, a conventionally known antioxidant, such as 2,6-di-tert-butyl-4-methylphenol, may be contained as necessary. Further, dyes, pigments, flame retardants, anti-settling agents, or thixotropic enhancers, or the like may be added as necessary.

### [Step for fabricating thermally conductive addition-curable silicone composition]

The method for manufacturing the thermally conductive addition-curable silicone composition according to the present invention will be described below. The method for manufacturing the thermally conductive addition-curable silicone composition in the present invention is not particularly limited, the thermally conductive addition-curable silicone composition is produced by mixing the above-described components (A) to (E), and as necessary, the components (F), (G), and/or other components in addition thereto.

Specific examples thereof include a method of mixing the above-described components (A) to (E), and as necessary, the components (F), (G), and/or other components in addition thereto using a mixer such as Trimix, Twinmix, Planetary Mixer (all registered trademarks of mixers manufactured by INOUE MFG., INC.), Ultra Mixer (a registered trademark of a mixer manufactured by MIZUHO INDUSTRIAL CO., LTD.), or HIVIS MIX (a registered trademark of a mixer manufactured by PRIMIX Corporation) at 25°C for 3 minutes to 24 hours, preferably 5 minutes to 12 hours, and more preferably 10 minutes to 6 hours. In addition, degassing may be performed during mixing, and mixing may be done while heating in the range of 40 to 200°C.

In the present invention, it is preferable to first mix the components (A) and (B) at 50 to 200°C, and then mix the components (C), (D), and (E) at 25°C, from the viewpoint that the thermally conductive addition-curable silicone composition exhibits favorable thermal conductivity and appropriate viscosity.

The viscosity measured at 25°C for the thermally conductive addition-curable silicone composition of the present invention is preferably 10 to 1,000 Pa·s, more preferably 20 to 700 Pa·s, and still more preferably 40 to 500 Pa·s. When the viscosity is in the range of 10 to 1,000 Pa·s, the thermally conductive addition-curable silicone composition of the present invention exhibits excellent workability, with easy shape retention, uniform distribution of the thermally conductive filler in the silicone composition, and easy dispensing and application. The viscosity can be achieved by adjusting the amounts of each component blended described above.

Note that, in the present invention, viscosity is the absolute viscosity of the thermally conductive addition-curable silicone composition, measured at 25°C using a Malcolm viscometer (Type PC-1T) (rotor A at 10 rpm, shear rate 6 [1/s]).

In addition, the thermally conductive addition-curable silicone composition of the present invention typically has a thermal conductivity of 0.5 to 100 W/m·K, but it is preferable to have a thermal conductivity of 2.5 W/m·K or more, in order to exhibit excellent heat dissipation performance when mounted on electronic component packages or power modules.

Note that, in the present invention, the thermal conductivity is the value obtained by wrapping each thermally conductive addition-curable silicone composition in kitchen wrap and measuring the thermal conductivity with a TPS-2500S manufactured by KYOTO ELECTRONICS MANUFACTURING CO., LTD.

The curing conditions when heating and curing the thermally conductive addition-curable silicone composition of the present invention are not particularly limited, but are typically 80 to 200°C, preferably 100 to 180°C, for 15 minutes to 4 hours, and preferably 30 minutes to 2 hours.

### EXAMPLE

The present invention will be specifically described below using examples and comparative examples, but the present invention is not limited thereto.

First, the following components used in the preparation of the thermally conductive addition-curable silicone composition of the present invention were prepared. Note that the kinematic viscosity is the value at 25°C measured with an Ubbelohde-type Ostwald viscometer.

### [Component (A)]

A-1: Dimethylpolysiloxane with both ends capped with dimethylethynyl groups and a kinematic viscosity of 850 mm²/s at 25°C (ethynyl group amount = 0.00013 mol/g)
A-2: Dimethylpolysiloxane with both ends capped with dimethylethynyl groups and a kinematic viscosity of 4,000 mm²/s at 25°C
   (ethynyl group amount = 0.000067 mol/g)
A-3: Dimethylpolysiloxane with both ends capped with dimethylethynyl groups and a kinematic viscosity of 16,000 mm²/s at 25°C
   (ethynyl group amount = 0.000045 mol/g)
a-4: Dimethylpolysiloxane with both ends capped with dimethylvinylsilyl groups and a kinematic viscosity of 1,000 mm²/s at 25°C
   (vinyl group amount = 0.00010 mol/g)
a-5: Dimethylpolysiloxane with both ends capped with dimethylvinylsilyl groups and a kinematic viscosity of 5,000 mm²/s at 25°C
   (vinyl group amount = 0.000064 mol/g)

### [Component (B)]

B-1: Spherical aluminum powder with an average particle diameter of 12 µm
B-2: Spherical aluminum powder with an average particle diameter of 9 µm
B-3: Irregularly shaped zinc oxide powder with an average particle diameter of 0.4 µm

### [Component (C)]

C-1: Methylhydrogendimethylpolysiloxane represented by the following formula (3) (Si-H amount = 0.00127 mol/g) 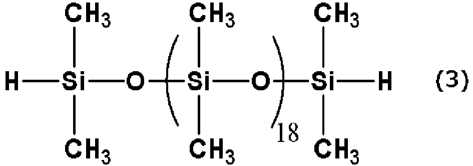
C-2: Methylhydrogendimethylpolysiloxane represented by the following formula (4)
   (Si-H amount = 0.00126 mol/g) 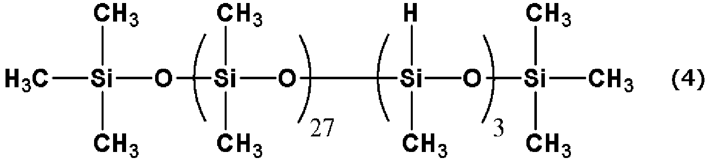
C-3: Methylhydrogendimethylpolysiloxane represented by the following formula (5)
   (Si-H amount = 0.00190 mol/g)

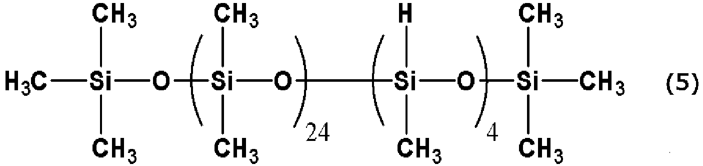

### [Component (D)]

D-1: A solution obtained by dissolving a platinumdivinyltetramethyldisiloxane complex in the same dimethylpolysiloxane as a-4 above (platinum atom content: 1 mass%)

### [Component (E)]

E-1: 1-ethynyl-1-cyclohexanol represented by the following formula (6)

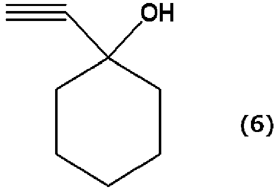

### [Component (F)]

F-1: Dimethylpolysiloxane with one end capped with a trimethoxysilyl group, represented by the following formula (7)

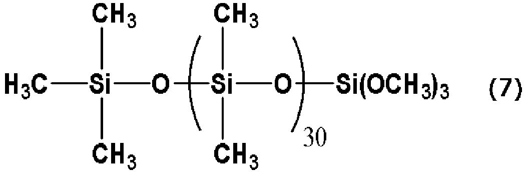

### [Component (G)]

G-1: Organosilane represented by the following formula (8)

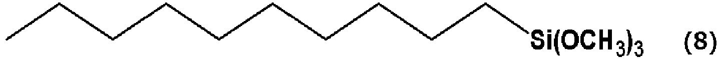

### [Examples 1 to 5 and Comparative Examples 1 to 7]

### <Preparation of thermally conductive addition-curable silicone composition>

The above components (A) to (G) were blended in the amounts shown in Tables 1 and 2 below, using the method described below, to prepare a thermally conductive addition-curable silicone composition. Note that, in Tables 1 and 2, SiH/SiE is the ratio of the total number of SiH groups in the component (C) to the total number of ethynyl groups in the component (A), and SiH/SiVi is the ratio of the total number of SiH groups in the component (C) to the total number of vinyl groups in the component (A).

The components (A) and (B) were added to a 5-liter Planetary Mixer (manufactured by INOUE MFG., INC.), and then component (F) or (G) was added. When the component (F) was added, the mixture was mixed at 170°C for 1 hour, and when the component (G) was added, the mixture was mixed at 70°C for 1 hour. After mixing, the mixture was cooled to 40°C or less, and then the components (C), (D), and (E) were added and mixed until uniform to prepare a thermally conductive addition-curable silicone composition.

For each thermally conductive addition-curable silicone composition obtained by the above method, viscosity, thermal conductivity, storage modulus G', and elongation at break were measured in accordance with the following method. The results are shown in evaluation results of Tables 1 and 2.

### [Viscosity]

The absolute viscosity of each thermally conductive addition-curable silicone composition was measured at 25°C using a Malcolm viscometer (Type PC-1T) (rotor A at 10 rpm, shear rate 6 [1/s]).

### [Thermal conductivity]

Each thermally conductive addition-curable silicone composition was wrapped in kitchen wrap, and the thermal conductivity was measured using a TPS-2500S manufactured by KYOTO ELECTRONICS MANUFACTURING CO., LTD.

### [Storage modulus G']

Each thermally conductive addition-curable silicone composition was applied at a 2 mm thickness between two parallel plates each having a diameter of 2.5 cm. A program to maintain the temperature at 150°C for 7,200 seconds after heating the coated plates from 25°C to 150°C at 5°C /min was created, and the storage modulus G' was read 5,100 seconds after the start of the test. Note that a viscoelasticity measuring device (ARES-G2, manufactured by TA Instruments, Inc.) was used for the measurement.

### [Elongation at break]

Each thermally conductive addition-curable silicone composition was heated at 150°C for 60 minutes to cure and fabricate a 2 mm thick sheet, and a No. 2 dumbbell shape was then fabricated in accordance with JIS K6251, and the elongation at break was measured.

**[Table 1]**

| | | Example | | | | |
|---|---|---|---|---|---|---|
| | | 1 | 2 | 3 | 4 | 5 |
| Composition | A-1 (parts by mass) | 100 | 100 | | | |
| | A-2 (parts by mass) | | | 100 | 100 | |
| | A-3 (parts by mass) | | | | | 100 |
| | a-4 (parts by mass) | | | | | |
| | a-5 (parts by mass) | | | | | |
| | B-1 (parts by mass) | | | 3998 | 3998 | 3998 |
| | B-2 (parts by mass) | 723 | 723 | | | |
| | B-3 (parts by mass) | 178 | 178 | 878 | 878 | 878 |
| | Mass% of component (B) based on total composition | 88.6 | 88.6 | 92.3 | 92.2 | 92.3 |
| | C-1 (parts by mass) | 5.83 | 5.56 | | | |
| | C-2 (parts by mass) | 4.07 | 3.87 | 7.31 | 9.55 | 4.92 |
| | C-3 (parts by mass) | | | | | |
| | D-1 (parts by mass) | 0.150 | 0.150 | 0.270 | 0.270 | 0.270 |
| | E-1 (parts by mass) | 0.225 | 0.225 | 0.210 | 0.210 | 0.210 |
| | F-1 (parts by mass) | | | 300 | 300 | 300 |
| | G-1 (parts by mass) | 6.0 | 6.0 | | | |
| | SiH/SiE (number ratio) | 0.96 | 0.92 | 1.38 | 1.80 | 1.38 |
| Evaluation result | Viscosity (Pa·s) | 130 | 130 | 210 | 230 | 290 |
| | Thermal conductivity (W/m·K) | 3.2 | 3.2 | 6.2 | 6.1 | 6.2 |
| | Storage modulus G' (kPa) | 50 | 31 | 28 | 19 | 10 |
| | Elongation at break (%) | 580 | 540 | 220 | 280 | 310 |

**[Table 2]**

| | | Com parative Example | | | | | | |
|---|---|---|---|---|---|---|---|---|
| | | 1 | 2 | 3 | 4 | 5 | 6 | 7 |
| Composition | A-1(parts by mass) | | | | | | | |
| | A-2(parts by mass) | | | | | | | |
| | A-3(parts by mass) | | | | | | | |
| | a-4(parts by mass) | 100 | 100 | | | | | |
| | a-5(parts by mass) | | | 100 | 100 | 100 | 100 | 100 |
| | B-1(parts by mass) | | | 3998 | 3998 | 3998 | 3998 | 3998 |
| | B-2(parts by mass) | 728 | 725 | | | | | |
| | B-3(parts by mass) | 179 | 178 | 878 | 878 | 878 | 878 | 878 |
| | Mass% of component (B) based on total composition | 88.6 | 88.6 | 92.3 | 92.3 | 92.2 | 92.2 | 92.3 |
| | C-1(parts by mass) | 6.25 | 6.02 | | | | | |
| | C-2(parts by mass) | 4.36 | 4.19 | 7.31 | 8.23 | 10.29 | 13.38 | |
| | C-3(parts by mass) | | | | | | | 6.84 |
| | D-1(parts by mass) | 0.150 | 0.150 | 0.270 | 0.270 | 0.270 | 0.270 | 0.270 |
| | E-1(parts by mass) | 0.225 | 0.225 | 0.210 | 0.210 | 0.210 | 0.210 | 0.210 |
| | F-1(parts by mass) | | | 300 | 300 | 300 | 300 | 300 |
| | G-1(parts by mass) | 6.0 | 6.0 | | | | | |
| | SiH/SiVi(number ratio) | 1.34 | 1.29 | 1.42 | 1.60 | 2.00 | 2.60 | 2.00 |
| Evaluation result | Viscosity (Pa·s) | 140 | 140 | 230 | 220 | 210 | 210 | 280 |
| | Thermal conductivity (W/m·K) | 3.2 | 3.3 | 5.9 | 5.7 | 5.7 | 5.9 | 5.9 |
| | Storage modulus G'(kPa) | 44 | 27 | 5.7 | 11 | 16 | 18 | 49 |
| | Elongation at break (%) | 0 (Not measurable putty-like cured product) | 0 (Not measurable putty-like cured product) | 0 (Not measurable putty-like cured product) | 0 (Not measurable putty-like cured product) | 0 (Not measurable putty-like cured product) | 0 (Not measurable putty-like cured product) | 0 (Not measurable putty-like cured product) |

From the evaluation results in Tables 1 and 2, it has been found that the thermally conductive addition-curable silicone compositions of Examples 1 to 5, which satisfy the requirements of the present invention, provide a cured product with a low storage modulus G' and high extensibility when heat-cured. In contrast, in Comparative Examples 1 to 7, which were prepared using the component (a-4) or (a-5) as the component (A), the storage modulus G' when heat-cured was low, but the cured product became putty-like and the elongation at break was not able to be measured.

Therefore, the thermally conductive addition-curable silicone composition of the present invention provides a cured product with a low storage modulus G' and high extensibility when heat-cured. As a result, the composition can be suitably used in electronic component packages and power modules with large warping, and can also follow the expansion and contraction caused by the thermal history of repeated heating and cooling of the heat-generating portion over a long period of time.

The present description includes the following embodiments.
[1] A thermally conductive addition-curable silicone composition, comprising:
   (A) an organopolysiloxane having at least one alkynyl group in one molecule and a kinematic viscosity of 60 to 100,000 mm²/s at 25°C;
   (B) at least one thermally conductive filler selected from the group consisting of metals, metal oxides, metal hydroxides, metal nitrides, metal carbides, and allotropes of carbon: an amount of 10 to 96 mass% based on the total composition;
   (C) an organohydrogenpolysiloxane having two or more hydrogen atoms bonded to silicon atom in one molecule: an amount such that the number of Si-H groups in the component (C) is 0.5 to 10 based on the total number of alkynyl groups in the component (A);
   (D) a platinum group metal catalyst: an effective amount; and
   (E) one or more addition-curing reaction control agents selected from the group consisting of acetylene compounds, nitrogen compounds, organophosphorus compounds, oxime compounds, and organochloro compounds: 0.05 to 5 parts by mass based on 100 parts by mass of the component (A).
[2] The thermally conductive addition-curable silicone composition according to [1], further comprising (F) an organopolysiloxane represented by the following general formula (1): an amount of 0.5 to 10 mass% based on the total composition, 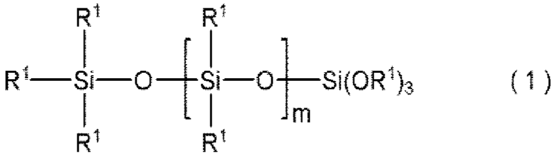 wherein R¹ represents a monovalent hydrocarbon group having 1 to 10 carbon atoms and optionally having a substituent, and represents a monovalent hydrocarbon group not including an aliphatic unsaturated bond, each R¹ is the same or different, and m is an integer of 5 to 100.
[3] The thermally conductive addition-curable silicone composition according to [1] or [2], further comprising (G) an organosilane represented by the following general formula (2) and/or a (partially) hydrolyzed condensate thereof: an amount of 0.1 to 10 mass% based on the total composition,

   R²ₐSi(OR³)₄₋ₐ (2)

   wherein R² is independently an unsubstituted or halogen-substituted monovalent hydrocarbon group having 1 to 20 carbon atoms, R³ is independently a hydrogen atom or an alkyl group having 1 to 6 carbon atoms, and a is an integer of 1 to 3.
[4] The thermally conductive addition-curable silicone composition according to any one of [1] to [3], wherein the component (A) is an organopolysiloxane having at least two alkynyl groups in one molecule.
[5] The thermally conductive addition-curable silicone composition according to any one of [1] to [4], wherein the component (A) is an organopolysiloxane having at least two ethynyl groups in one molecule.

Note that the present invention is not limited to the embodiments described above. The above embodiments are illustrative, and any configuration that is substantially identical to the technical idea described in the claims of the present invention and achieves similar effects is included within the technical scope of the present invention.

## Claims

1. A thermally conductive addition-curable silicone composition, comprising:
(A) an organopolysiloxane having at least one alkynyl group in one molecule and a kinematic viscosity of 60 to 100,000 mm²/s at 25°C;
(B) at least one thermally conductive filler selected from the group consisting of metals, metal oxides, metal hydroxides, metal nitrides, metal carbides, and allotropes of carbon: an amount of 10 to 96 mass% based on the total composition;
(C) an organohydrogenpolysiloxane having two or more hydrogen atoms bonded to silicon atom in one molecule: an amount such that the number of Si-H groups in the component (C) is 0.5 to 10 based on the total number of alkynyl groups in the component (A);
(D) a platinum group metal catalyst: an effective amount; and
(E) one or more addition-curing reaction control agents selected from the group consisting of acetylene compounds, nitrogen compounds, organophosphorus compounds, oxime compounds, and organochloro compounds: 0.05 to 5 parts by mass based on 100 parts by mass of the component (A).

2. The thermally conductive addition-curable silicone composition according to claim 1, further comprising (F) an organopolysiloxane represented by the following general formula (1): an amount of 0.5 to 10 mass% based on the total composition, 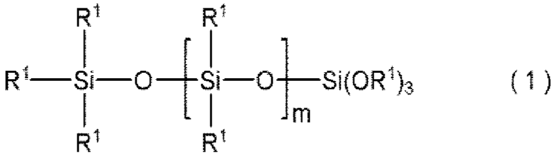 wherein R¹ represents a monovalent hydrocarbon group having 1 to 10 carbon atoms and optionally having a substituent, and represents a monovalent hydrocarbon group not including an aliphatic unsaturated bond, each R¹ is the same or different, and m is an integer of 5 to 100.

3. The thermally conductive addition-curable silicone composition according to claim 1, further comprising (G) an organosilane represented by the following general formula (2) and/or a (partially) hydrolyzed condensate thereof: an amount of 0.1 to 10 mass% based on the total composition,
R²ₐSi(OR³)₄₋ₐ (2)
wherein R² is independently an unsubstituted or halogen-substituted monovalent hydrocarbon group having 1 to 20 carbon atoms, R³ is independently a hydrogen atom or an alkyl group having 1 to 6 carbon atoms, and a is an integer of 1 to 3.

4. The thermally conductive addition-curable silicone composition according to claim 1, wherein the component (A) is an organopolysiloxane having at least two alkynyl groups in one molecule.

5. The thermally conductive addition-curable silicone composition according to claim 1, wherein the component (A) is an organopolysiloxane having at least two ethynyl groups in one molecule.
